(19) Europäisches Patentamt
European Patent Office
Office européen des brevets

(11) Veröffentlichungsnummer: **0 077 002 A1**

(12) **EUROPÄISCHE PATENTANMELDUNG**

(21) Anmeldenummer: 82109180.8

(22) Anmeldetag: 05.10.82

(51) Int. Cl.³: C 02 F 3/28

(30) Priorität: 14.10.81 BE 2059415

(43) Veröffentlichungstag der Anmeldung: 20.04.83 Patentblatt 83/16

(84) Benannte Vertragsstaaten: AT BE CH DE FR GB IT LI LU NL SE

(71) Anmelder: N.V. Studiebureau O. de Konincks, Valkenveld 1-12, B-2610 Wilrijk (BE)
Anmelder: RIJKSUNIVERSITEIT GENT, Coupure 533, B-9000 Gent (BE)
Anmelder: GEBRÜDER SULZER AKTIENGESELLSCHAFT, Zürcherstrasse 9, CH-8401 Winterthur (CH)

(72) Erfinder: Verstraete, Willy, Prof., Dasstraat 4, B-9030 Wondelgem (BE)
Erfinder: De Proost, Viktor, Ferdinand Verbiestlaan 46, B-2520 Edegem (BE)
Erfinder: Ombregt, Jean-Pierre, Spoorweglaan 267, B-2610 Wilrijk (BE)
Erfinder: Pipyn, Pascal, Meirstraat 22, B-9851 Nevele (BE)

(74) Vertreter: Dipl.-Ing. H. Marsch Dipl.-Ing. K. Sparing Dipl.-Phys.Dr. W.H. Röhl Patentanwälte, Rethelstrasse 123, D-4000 Düsseldorf (DE)

(54) **Verfahren und Anlage für eine anaerobe Behandlung von Abwässern und für die Produktion von methanhaltigem Biogas.**

(57) Die anaerobe Fermentation zur Erzeugung von Methan wird in zwei voneinander getrennten Stufen durchgeführt. In der ersten, der sogenannten Aufbereitungsstufe (3), wird eine wäßrige Rohflüssigkeit bei Verweilzeiten von ungefähr einer Stunde bis zu zwei Tagen zu einer Speiseflüssigkeit für die zweite Stufe (12) unter Bedingungen aufbereitet, bei denen wesentliche Kenngrössen der Rohflüssigkeit, wie pH-Wert, Temperatur, Mengen an suspendierten Feststoffen, Fließgeschwindigkeit, Konzentration und Zusammensetzung von organischen und anorganischen Komponenten, überwacht und beeinflußt werden. In der nachfolgenden zweiten Stufe (12) werden die organischen Komponenten der Speiseflüssigkeit bei Verweilzeiten von ungefähr drei Stunden bis vier Tagen unter Bedingungen zu Methan umgesetzt, die mit Hilfe der Schlammkonzentration in der zweiten Stufe (12) und der geregelten Einspeisung dieses Schlammes eine stabile und störungsfreie Produktion mit optimaler Methanerzeugung gewährleisten.

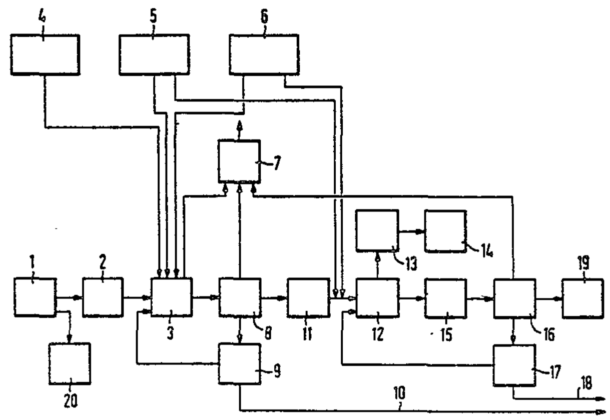


EP 0 077 002 A1

P.5742/Wg/IS

- N.V. Studiebureau O. de Koninckx,
Valkenveld 1-12,
B-2610 Wilrijk

- Rijksuniversiteit Gent
en Coupure 533
B-9000 Gent

- Gebrüder Sulzer, Aktiengesellschaft,
CH-8400 Winterthur

BEZEICHNUNG GEÄNDERT
siehe Titelseite

---

Verfahren und Anlage zur Erzeugung von Methan aus und zur Behandlung von organische Stoffe enthaltenden wässrigen Flüssigkeiten

---

Die vorliegende Erfindung betrifft ein verbessertes industrielles Verfahren für eine anaerobe Behandlung von Abwässern und für die Produktion von methanhaltigem Biogas sowie eine Anlage für die Durchführung dieses Verfahrens.

Anaerobe Faulverfahren sind seit langer Zeit in Abwasserbehandlungsanlagen für die Stabilisierung von primärem und sekundärem Schlamm bekannt. In neuerer Zeit werden anaerobe Prozesse darüberhinaus mehr und mehr für die direkte Behandlung von Abwässern benutzt.

Tatsächlich weist die anaerobe Behandlung von Industrieabwässern mit einem chemischen Sauerstoffbedarf (CSB) von mehr als 1500 mg/l eine Anzahl von grundlegenden Vorteilen gegenüber aeroben Behandlungen, z.B. mit aktiviertem Schlamm, auf; die wichtigsten dieser Vorteile sind:

- niedriger Energieverbrauch und Produktion einer ins Gewicht fallenden Menge an energiereichem Biogas;
- sehr kleine Ueberschuss-Schlammerzeugung;
- sehr geringer Bedarf an Nährstoffen;

- auch nach langen Abschaltperioden bleibt die Aktivität des Schlammes unverändert; Saisonbetrieb ist deshalb möglich.

Weiterhin sind verglichen mit Aktiv-Schlamm-Verfahren oder anderen aeroben Abwasserbehandlungstechniken die Belastungen, die verarbeitet werden können, im allgemeinen höher.

Ueblicherweise wird die anaerobe Fermentation von Abwasser in einem Schritt durchgeführt, d.h. der ganze Prozess findet in einem einzigen Reaktor statt; dafür sind bisher gewöhnlich vier verschiedene Arten von Reaktoren gebräuchlich:

1. Niedrig- und hochbelastete Fermentationstanks, bei denen periodisch Flüssig-Feststoff-Gemische abgezogen und entsprechend Rohwasser eingespeist wird. Die Raumbelastung variiert von 0,5 bis 5 kg an organischen Stoffen pro $m^3$ und Tag.

2. Kontaktreaktoren, bei denen aus der abgezogenen Klärflüssigkeit der Schlamm abgetrennt und zurückgeführt wird. In diesem Fall ist die maximale Raumbelastung etwa 5 kg an organischen Stoffen pro $m^3$ und Tag.

3. Anaerobe Filter, bei denen das Abwasser durch ein Filterbett mit Trägermaterial, auf dem anaerobe Bakterien angesiedelt sind, geschickt wird. Die maximale Raumbelastung beträgt bis 7 kg an organischem Material pro $m^3$ und Tag.

4. Anaerobe Aufwärtsstrom-Reaktoren (anaerobic upflow reactors), bei denen das Abwasser ein expandiertes Bett aus anaerobem Schlamm von unten nach oben durchfliesst und anschliessend mit

Hilfe einer Spezialeinrichtung in geklärtes Abwasser, Gas und Schlamm separiert wird. Der abgesetzte Schlamm fliesst zurück in den Reaktor. Die maximale Raumbelastung beträgt bis 15 kg an flüchtigen, organischen Stoffen pro $m^3$ und Tag.

Die vorstehend geschilderten, klassischen, heute gebräuchlichen Systeme für die Methangärung haben jedoch den grossen Nachteil, dass sie schwierig zu überwachen und zu regeln sind; darüberhinaus sind diese Systeme anfällig für Stossbelastungen mit toxischen Stoffen. Diese Nachteile bzw. diese Störanfälligkeit sind der wesentlichste Grund, warum die Technik der anaeroben Abwasserbehandlung bisher noch keine weite Verbreitung gefunden hat.

Bisher stützen sich die angewendeten Verfahren auf empirische Daten, wobei die Steuerung des Reaktors bzw. der Reaktion in Abhängigkeit von pH-Wert-Messungen und von der erzielten Methanausbeute erfolgt. Diese Schwierigkeiten sind in erster Linie einerseits eine Folge eines Mangels an theoretischen Kenntnissen der Reaktionsmechanismen des Fermentationsprozesses und andererseits auch durch die Tatsache verursacht, dass der Prozess ineinem einzigen Reaktionsgefäss durchgeführt wird, woraus verschiedene Nachteile resultieren:

1. Völlig verschiedene biochemische Prozesse finden unter den gleichen Betriebsbedingungen statt, so dass früher oder später Ungleichgewichte auftreten müssen. Das bedeutet, dass die empfindlichste Prozessphase, das ist der Schritt der Methanproduktion, von ungeregelten und schnell ablaufenden Reaktionen vorhergehender Phasen beeinträchtigt wird. Daraus

kann z.B. eine Anhäufung von Stoffwechsel-Zwischenprodukten, wie z.B. flüchtigen Fettsäuren, Ammoniak oder Schwefelwasserstoff usw. entstehen, welche den Methanerzeugungsprozess stoppen können, wenn sie eine genügend hohe Konzentration erreichen. Der Ausfall der Methanerzeugung geschieht dabei entweder durch direkte Hemmung der methanproduzierenden Bakterien, oder durch Modifikationen der Umweltbedingungen, insbesondere des pH-Wertes, so dass die methanerzeugenden Bakterien nicht länger wirksam sein können.

2. Ist es schwierig, den Prozess gegen mögliche toxische Substanzen zu schützen, die mit dem Rohwasser zugeführt werden. Tatsächlich kann ein toxischer Schock den ganzen Prozess unwiderruflich zum Erliegen bringen, was eine erneute Aufbauphase von mehreren Wochen erfordern würde.

3. Ist der Prozess nicht geschützt gegen Ueberlastungen an organischen Stoffen oder gegen hydraulische Ueberlastungen und Schwankungen, woraus ein ins Gewicht fallendes Absinken des Wirkungsgrades folgen kann.

Der vorliegenden Erfindung liegt die Aufgabe zugrunde, die genannten Nachteile zu beseitigen und ein Verfahren zu schaffen, welches die grundlegende Theorie des Methangärungsprozesses berücksichtigt.

Um den Kern der Erfindung zu verdeutlichen, seien die theoretischen Grundlagen des anaeroben Fermentationsprozesses zunächst im einzelnen diskutiert.

Die anaerobe Fermentation wird im allgemeinen als ein

zweiphasiger biologischer Prozess beschrieben. In der ersten Phase werden komplexe organische Substrate "solubilisiert" oder aufgeschlossen, d.h. in einfachere Bestandteile zerlegt, und anschliessend durch fermentative Mikroorganismen zersetzt, wobei als Stoffwechselprodukte im wesentlichen flüchtige Fettsäuren, Milchsäure, Aethanol, Kohlendioxid und Wasserstoff entstehen. Diese Zwischenprodukte werden dann durch methanerzeugende Bakterien umgesetzt zu Methan und Kohlendioxid.

Kürzlich ist nun gefunden worden, dass von den Zwischenprodukten nur Methanol, Aethanol, Wasserstoff, Ameisensäure und Essigsäure durch die methanogenen Bakterien direkt umgesetzt werden können, während alle anderen Zwischenprodukte, die sogenannten "Elektronenakzeptor-(electron-sink)"-Verbindungen, in diese Substanzen durch eine dritte ganz spezielle Gruppe von Mikroorganismen umgewandelt werden müssen. Diese Gruppe sind die sogenannten obligatorisch wasserstoffproduzierenden, azetogenen Bakterien (OHPA). Diese Bakterien wachsen in sehr enger Verbindung mit den methanogenen Bakterien. Tatsächlich müssen die methanogenen Bakterien direkt den Wasserstoff binden, der durch die OHPA-Bakterien erzeugt wird, um günstige thermodynamische Bedingungen für das Wachstum ihrer Syntrophen, nämlich der OHPA-Bakterien, zu schaffen.

Daher müssen technisch die OHPA-Bakterien und die methanogenen Bakterien in unmittelbarer physischer Nachbarschaft zueinander gehalten werden, d.h. in einem einzigen Reaktionsgefäss. In der Praxis werden die Solubilisations- und Azidifikationsreaktionen also in dem gleichen Reaktor durchgeführt. Zweiphasen-Systeme, die auf der einen Seite eine Solubilisations-Hydrolyse und Azidifikationsphase sowie auf der anderen Seite eine azetogene-methanogene Phase

enthalten, sind bekannt. Bisher war der Grund für diese Phasentrennung jedoch die Tatsache, dass die beiden Hauptgruppen von Bakterien (d.h. die Säurebildner und die Methanerzeuger) im wesentlichen unterschiedliche Physiologien, Nährstoffbedürfnisse, Wachstumsraten und optimale Prozessbedingungen haben.

Die Erfindung basiert auf dem neuen Konzept, dass die Phasentrennung eine Regelung oder Steuerung der Solubilisations-Hydrolyse und der Azidifikationsphase im Hinblick auf bestimmte Zwischenprodukte (electron sink compounds) ermöglicht, so dass die zweite oder methanogene Phase unter optimalen Bedingungen ablaufen kann. Diese Steuerung ist einer der wesentlichen Punkte der Erfindung.

Unter axenischen (sauerstoff-freien) Bedingungen ist das Fermentationsmuster ganz leicht durch die Anwendung einer besonderen Art von Mikroorganismen zu steuern. Zum Beispiel produziert die Spezies Laktobazillus im wesentlichen Milchsäure oder ein Saccharomyzes, vornehmlich Aethanol. Bei gemischten, nicht axenischen Systemen besteht jedoch der einzige Weg, das Fermentationsmuster zu steuern, darin, dass man selektive Grenzbedingungen einhält. Hierbei ist die erste Frage, was sind die günstigsten Zwischenprodukte für die Methanbakterien, und zweitens wie muss die Hydrolyse und Azidifikationsphase gesteuert werden, um einen maximalen Anteil an diesen Zwischenprodukten zu erzeugen. Zur Beantwortung der ersten Frage wurde eine theoretische Studie, basierend auf thermodynamischen Berechnungen, durchgeführt, um das günstigste Zwischenprodukt für die Methanbakterien zu bestimmen. Daraus resultierte, dass Aethanol und Milchsäure die energiereichsten Substrate für die Bakterien der methanogenen Phase (OHPA-Bakterien und methanogene Bakterien = Syntrophe) sind.

Theoretisch sind 92 % und 122 % mehr Energie für die Syntrophe pro Einheit an produziertem Methan aus Aethanol bzw. Milchsäure,verglichen mit Essigsäure,verfügbar. Diese Energie wird ausgedrückt in kJ pro Mol erzeugtem Methan ($CH_4$) und beträgt 31,0 für Essigsäure, 32,3 für Proprionsäure, 32,7 für Buttersäure, 59,5 für Aethanol und 68,8 für Milchsäure.

Betrachtet man die Fermentation von einem Kohlehydrat, beispielsweise Glukose, so findet man, dass bei der vollständigen Umsetzung der Glukose zu Methan und Kohlensäure, abhängig von dem erzeugten Zwischenprodukt in der ersten Phase eines Zweiphasensystems, unterschiedliche Energiebeträge den Syntrophen zufliessen. Nur 15,4, 11,3 und 20,2 % der gesamten freien Energie, die entsprechend der nachstehend beschriebenen biochemischen Reaktion freigesetzt wird, kommen den Syntrophen zugute, wenn die erste Phase auf die Erzeugung von Essigsäure, Proprionsäure oder Buttersäure gerichtet wird (dies gilt ohne Weitergabe des Gases der Azidifikationsphase an die methanogene Phase).

$$C_6H_{12}O_6 + 3\ H_2O \longrightarrow 3\ CH_4 + 3\ HCO_3^- + 3\ H^+ - 404.3\ kJ$$

Dieser Prozentsatz wächst jedoch auf 44,1 und 51,1, wenn die Azidifikations- oder Konditionierungsphase in Richtung auf die Erzeugung von Aethanol und Milchsäure gesteuert wird. Die Energiemenge, die auf die OHPA- und Methanbakterien übergeht, vervielfacht sich also um den Faktor 3, wenn eine Aethanol- und/oder eine Milchsäure-Fermentation anstatt einer Fermentation mit gemischten Fettsäuren der methanerzeugenden Stufe vorausgeht.

Dies wurde durch einen Versuch bestätigt, bei dem die Methanproduktion aus den Reaktionsprodukten einer Konditionierungsstufe, die in Richtung auf die Produktion von Milchsäure und Aethanol (gemischte Milchsäure-Fermentation) gefahren wurde, verglichen wurde mit derjenigen aus den Reaktionsprodukten einer Konditionierungsstufe, die in Richtung auf die Produktion von flüchtigen Fettsäuren gefahren wurde. Die dabei verwendeten Methanreaktoren waren Aufwärtsstrom-Reaktoren mit eingebauten Trenneinrichtungen für eine Gas-Flüssigkeit-Feststoff-Trennung. Die Vorteile der Milchsäure/Aethanol-Fermentation treten deutlich zutage:

1. Wegen des niedrigeren Gehalts an schwer abbaubarer Proprionsäure gibt es einen grösseren Abbau des CSB (chemischen Sauerstoffbedarfs). Daraus ergibt sich ein 50 % niedrigerer Rest-CSB-Wert im Ablauf;

2. verbessertes Zurückhalten des Schlammes in dem Methanreaktor, woraus ein 50 % niedrigerer Gehalt an Feststoffen in dessen Ausfluss resultiert;

3. minimale Geruchsbelästigungen, die im allgemeinen durch die Bildung von Fettsäuren, insbesondere von Buttersäure, verursacht werden.

Es ist also evident, dass bei einer Einstufen-Fermentation oder einer unkontrollierten Zweistufen-Fermentation sich eine Restkonzentration an schwer abbaubarer Proprionsäure (thermodynamisch ungünstig für die OHPA-Bakterien) in dem Ausfluss eines Methanreaktors ergibt. Dies ist in

der Praxis bekannt und ergibt im allgemeinen einen verminderten Wirkungsgrad der Abwasserreinigungsanlage.

Als Antwort auf die zweite Frage hat man gefunden (Pipyn und Verstrate 1981), dass die Fermentation von Melasse im wesentlichen auf die Erzeugung von Milchsäure und Aethanol hin (gemischte Milchsäure-Fermentation) - ungeachtet der nicht axenischen Bedingungen - geführt werden kann. Dies wurde durch die Anwendung eines diskontinuierlichen oder "batch"-Betriebes bei der Beschickung erreicht, woraus eine diskontinuierliche und hohe Schlammbelastung zusammen mit einem pH-Wert-Abfall von 7 auf 4 resultierte. Weitere Untersuchungen mit kontinuierlich arbeitenden Reaktoren haben jedoch gezeigt, dass das gemischte Milchsäure-Fermentationsmuster bei einer kontinuierlichen Betriebsweise nicht für längere Zeit aufrechterhalten werden kann.

Abhängig von der hydraulischen Verweilzeit und der biologischen (Zell-) Aufenthaltszeit der Biomasse (Schlammalter), dem pH-Wert und der Belastung treten verschiedene Fermentationsmuster auf. Proprionsäure ist die dominante Komponente, wenn eine sehr lange, biologische Aufenthaltszeit (mehrere Wochen) zugelassen und der pH-Wert neutral gehalten wird oder wenn die Azidifikationsphase Substratstössen oder Mengenschwankungen unterworfen wird. Reduktionen der biologischen Aufenthaltszeit und leicht saure pH-Bedingungen verschieben die Fermentation zur Produktion von Buttersäure hin. Ein stabiles Fermentationsmuster mit Azetat als dominantem Produkt erreicht man bei biologischen Aufenthaltszeiten gleich den hydraulischen Verweilzeiten (z.B. 10 Stunden), pH-Werten im Bereich von 5,2 bis 5,5 und sich der Substrat-Sättigung nähernden Belastungen (keine Substratbegrenzung).

Unter nicht axenischen Bedingungen erhält man eine Aethanol-Fermentation, wenn der pH-Wert auf einen Wert kleiner 5, z.B. etwa gleich 4, gesteuert wird und die biologische Aufenthaltszeit einige Tage beträgt.

Eine andere Möglichkeit, um die Aufgabe der OHPA-Bakterien zu erleichtern, ist,die Säurefermentation auf so wenig wie möglich verschiedene Zwischenprodukte zu richten. Die Ergebnisse zeigen, dass die Vielfalt der gebildeten flüchtigen Fettsäuren die Aufgabe der OHPA-Bakterien erschwert. In Uebereinstimmung damit wird eine gesteuerte Fermentation durchgeführt, die zu einem oder einigen wenigen Zwischenprodukten führt. Dies wird durch Anwendung extremer Betriebsparameter - wie z.B. sehr hohe Schlammbelastungen, niedrige pH-Werte, kurze biologische Aufenthaltszeiten, hohe Temperaturen usw. - ermöglicht.

Die Erfindung betifft ein Verfahren für die Produktion von Methangas und die Behandlung von wässrigen Lösungen von organischen Verbindungen mittels eines zweistufigen anaeroben Fermentationsprozesses. Die erste Stufe besteht im wesentlichen aus einem biologischen Konditionierungs- und Ueberwachungsgefäss (BCCV) und dient dazu, die Speiseflüssigkeit für die zweite Stufe so optimal wie möglich durch verschiedene, im folgenden beschriebene Mittel aufzubereiten und konstant zu halten. Die zweite Stufe besteht im wesentlichen in einem Methanreaktor, in dem Methangas aus der konditionierten Speiseflüssigkeit erzeugt wird.

Die mit einer solchen Anlage nach dieser Methode erreichten Vorteile sind:

- stabiler und zuverlässiger Betrieb des Methanreaktors;

- höhere Raumbelastungen des Methanreaktors;
- höhere spezifische Methanproduktion;
- höherer Gesamtwirkungsgrad der Abwassereinigung.

Die Methoden für die Ueberwachung und Regelung in der ersten Stufe können wie folgt angegeben werden:

Bei der Konditionierung:

- Solubilisation und Hydrolyse unter optimalen Bedingungen;
- Bildung von flüchtigen Fettsäuren, Milchsäure oder Aethanol unter spezifischen Prozessbedingungen, um die Produktion erwünschter Stoffwechsel-Zwischenprodukte zu maximieren;
- ausreichende Pufferung der Menge und der Konzentration des einfliessenden Rohwassers;
- Zugabe von Nährstoffen;
- Entfernung von Schwefelwasserstoff;
- Entfernung von Nitrit- und Nitrat-Ionen;
- Entfernung von Ammoniak.

Bei der Regulierung:

- pH-Regelung;
- Temperatur-Regelung;
- Regelung des Zuflusses zur ersten Stufe, d.h. zum BCCV, abhängig von der pH-Wert-Differenz ($\Delta$ pH) vor und nach dem BCCV und/oder der pH-Wert-Differenz vor und nach dem Methanreaktor;
- Regelung des Gehalts an gelösten Feststoffen.

Abhängig von der Qualität des zufliessenden Rohwassers werden eine oder mehrere dieser Mittel oder Massnahmen

angewendet. Sie werden nachfolgend beschrieben.

Nach der Erfindung wird die Solubilisations-Hydrolyse durch die Benutzung eines Schlammseparators nach dem BCCV - es kann eine Schwerkraftabsetzung mittels eines Parallelplatten-Separators oder einer anderen Technik benutzt werden - und die vollständige oder teilweise Rückführung des abgesetzten Schlammes gefördert; dieser ist reich an Organismen, die die Solubilisation und die Hydrolyse im BCCV fördernde Enzyme bilden. Die Solubilisations-Hydrolyse kann auch verbessert werden durch die direkte Zugabe von entsprechenden Enzym-Präparaten in den BCCV, z.B. von Lipasen, Proteasen und/oder Cellulasen.

Nach der Erfindung wird die Produktion der geeignetsten Stoffwechsel-Zwischenprodukte für die Methanerzeugung durch die Anwendung eines oder mehrerer der nachstehend beschriebenen Wege maximiert:

Ein erster Weg besteht darin, die Produktion von Proprionsäure in der ersten Stufe zu unterdrücken, indem man bei einem sauren pH-Wert (kleiner 6,0) einer Zell-Aufenthaltszeit kleiner oder gleich 10 Tagen und einer Raumbelastung grösser als 15 - 25 kg CSB/($m^3$.d) ,abhängig von der Temperatur und der Art des Substrates,arbeitet;

ein zweiter Weg besteht in der Begünstigung der Produktion von Buttersäure durch einen pH-Wert zwischen 5,0 und 6,5 und einer Zell- Aufenthaltszeit von 2 - 10 Tagen;

ein dritter Weg ist, die Produktion von Essigsäure in dem BCCV zu begünstigen, indem der pH-Wert zwischen 5,2 und 5,5 gehalten wird und die volumetrische Belastung ungefähr 15 kg CSB/($m^3$.d) gehalten wird;

ein vierter Weg besteht darin, eine reine oder gemischte Milchsäure-Fermentation (Fermentation in Richtung auf Milchsäure oder auf Milchsäure und Aethanol hin) durch diskontinuierliche Einspeisung des Rohwassers und anschliessender pH-Wert-Erniedrigung der ersten Stufe von neutralen Werten zu ausgesprochen sauren Bedingungen (pH $\leq$ 4) zu erreichen. Die Zell-Aufenthaltszeit sollte dabei gleich der hydraulischen Verweilzeit und in Abhängigkeit von der Substratkonzentration zwischen wenigen Stunden und 2 Tagen betragen. Dies kann verwirklicht werden durch die Verwendung zweier BCCV, die parallel zueinander geschaltet sind und abwechselnd beschickt werden;

ein fünfter Weg ist, eine Aethanol-Fermentation durch Betriebsbedingungen mit einem ausgeprägt sauren pH-Wert (pH $\leq$ 4) und einer langen Zell-Aufenthaltszeit (mehrere Tage) mittels einer intensiven Schlammabtrennung und -rezirkulation zu erreichen.

Nach der Erfindung wird eine Vergleichmässigung der Qualität des wässrigen Substrates durch mechanisches Rühren in dem BCCV erreicht. Eine Pufferung der Menge bei diskontinuierlicher Einspeisung wird durch Flüssigkeitsniveau-Schwankungen in dem BCCV ermöglicht, so dass der zweiten Stufe Speiseflüssigkeit nahezu konstanter Menge und Konzentration zugeführt wird.

Nach der Erfindung werden die wesentlichen Nährstoffe, wie Stickstoff und Phosphor, entweder dem zugeführten Rohwasser oder der den BCCV verlassenden Flüssigkeit oder beiden in Abhängigkeit von den Erfordernissen der Bakterienkulturen zugegeben.

Nach der Erfindung werden hohe Sulfatkonzentrationen in

dem zufliessenden Rohwasser in der ersten Stufe zu Sulfid reduziert und anschliessend entfernt, um die Methanfermentation in der zweiten Stufe zu optimieren und die Qualität des erzeugten Biogases zu verbessern. Dies kann durch Strippen bei einem sauren pH-Wert erreicht werden.

Nach der Erfindung werden hohe Nitrit- und Nitrat-Konzentrationen in dem zufliessenden Rohwasser in der ersten Stufe zu Stickstoff reduziert, welcher keinen störenden Einfluss auf die Methanfermentation in der zweiten Stufe hat.

Nach der Erfindung wird eine teilweise oder vollständige Hemmung der biochemischen Reaktionen in der ersten und in der zweiten Stufe durch toxische Mengen an Ammoniak, die in dem Rohwasser enthalten oder beim Aufbrechen der organischen Stickstoffverbindungen gebildet werden, durch die Elimination des Ammoniaks vermieden. Dieses kann durch Ammoniak-Strippen bei einem alkalischen pH-Wert oder durch andere Methoden vor oder nach dem BCCV, aber in jedem Falle vor der zweiten Stufe, geschehen.

Nach der Erfindung wird die Zuverlässigkeit des methanerzeugenden Prozesses weiterhin durch weitestgehende Regelung und Automatisierung gefördert.

Optimale pH-Werte in der ersten Stufe werden mit Hilfe einer pH-Wert-Regelung und gegebenenfalls Säure- oder Basenzugabe in den BCCV erreicht.

Optimale pH-Werte für die Speiseflüssigkeit der zweiten Stufe werden mittels einer zweiten pH-Wert-Regelung in der den BCCV verlassenden Flüssigkeit und gegebenenfalls Zugabe von Säuren oder Basen gewährleistet.

Mittels einer Temperatur-Regelung im Rohwasser und Heizen oder Kühlen in einem Wärmeaustauscher werden in der ersten Stufe bestimmte Temperaturen aufrechterhalten. In der gleichen Weise werden optimale Temperaturen für die und in der zweiten Stufe durch eine zweite Temperaturregelung und gegebenenfalls entsprechendes Heizen oder Kühlen sichergestellt.

Die pH-Wert-Aenderung oder $\Delta$ pH zwischen dem einfliessenden Rohwasser und der den BCCV verlassenden Flüssigkeit ist ein Mass für die Menge der in der ersten Stufe gebildeten organischen Säuren. Abhängig von Konzentration an zu verarbeitenden Inhaltsstoffen, Pufferkapazität und Vergärbarkeit des einfliessenden Rohwassers ist die pH-Wert-Aenderung mehr oder weniger ausgeprägt.

Nach der Erfindung dient diese pH-Wert-Aenderung dazu, irgendwelche Aenderungen in der biologischen Qualität des einfliessenden Rohwassers durch ungewöhliche Belastungen an zu fermentierendem Material oder an toxischen Stoffen aufzuzeigen und um gegebenenfalls die Zufuhr an Rohwasser zu unterbrechen.

Es gibt praktische Fälle, bei denen das zu behandelnde wässrige Substrat zwar keine Stoffe, die in organische Säuren umgewandelt werden können, aber direkt organische Säuren enthält (z. B. Abwasser von Flachsröstereien und Abwasser von Zuckerrüben-Waschwasser-Kreisläufen einer Zuckerfabrik). In diesen Fällen kann nach der Erfindung ein Wechsel in der biologischen Qualität des Substrats durch die Benutzung eines kleinen Monitor-Reaktors, der tropfenweise mit Glukose oder einer anderen leicht abbauba ren Substanz gespeist wird, angezeigt werden. Unter

normalen Bedingungen erzeugt die Fermentation von Glukose eine stetige pH-Wert-Reduktion in dem Monitor-Reaktor; ein toxischer Stoss würde diese Fermentation jedoch behindern und es gäbe keine pH-Wert-Aenderung. Das Fehlen einer pH-Wert-Aenderung im Monitor wird daher zur Ausgabe eines Alarmes und gegebenenfalls zum Absperren der Speiseflüssigkeitszufuhr zur zweiten Stufe benutzt, bevor ein toxischer Schock im Methanreaktor entsteht.

Auf der anderen Seite ist die pH-Wert-Aenderung zwischen der Speiseflüssigkeit zur zweiten Stufe und der die zweite Stufe verlassenden Reinflüssigkeit ein Mass für die Wirksamkeit der Methanfermentation. Abhängig von der Pufferkapazität und der Konzentration der organischen Stoffwechselprodukte ist diese pH-Wert-Aenderung mehr oder weniger ausgeprägt.

Nach der Erfindung wird diese pH-Wert-Aenderung benutzt, um die Menge der dem Methan-Reaktor zugeführten Speiseflüssigkeit zu regeln und unter Umständen abzusperren.

Nach der Erfindung wird der Anteil an festen Schwebestoffen in der Speiseflüssigkeit zu dem Methan-Reaktor auf Werte kleiner als das 0,2- bis 0,25-fache des CBS-Gehaltes an löslichen organischen Substanzen geregelt (CBS = chemischer Sauerstoffbedarf; ist ein Mass für die Menge an organischer Substanz). Dies erfolgt mit Hilfe einer Schlammabtrennung nach der ersten Stufe und durch ein geregeltes, vollständiges oder teilweises Abziehen des abgetrennten Schlammes.

In der zweiten Stufe des Verfahrens nach der Erfindung wird die aufbereitete Speiseflüssigkeit aus der ersten Stufe durch ein expandiertes Schlammbett geführt. Dieses Schlammbett enthält Bakterien, welche in

der zweiten und dritten theoretischen Phase des Methanfermentations-Prozesses wirksam werden, nämlich die OHPA-Bakterien und die methanogenen Bakterien. Das Schlammbett befindet sich in dem Methan-Reaktor; dieser besteht aus einem Gefäss, in dem die einströmende Speiseflüssigkeit durch ein expandiertes Schlammbett aufwärtsströmt, ohne dass Schlamm dabei ausgeschwemmt wird. Weiterhin ist der Methan-Reaktor mit einem internen Abscheider-Element versehen, welches die Trennung von Gas-Flüssigkeit-Schlamm-Mischungen ermöglicht und eine Rezirkulation des Schlammes in das Schlammbett durch die Schwerkraft gewährleistet. Dieser Typ des Methan-Reaktors wird anaerober "Aufwärtsstrom-Reaktor" (Upflow reactor) oder "Aufwärtsstrom-Anaerob-Schlammbett"-(UASB)-Reaktor genannt.

In einer Variante des Verfahrens nach der Erfindung wird die konditionierte Speiseflüssigkeit aus der ersten Phase einem Methan-Reaktor zugeführt, der mit einem inerten Trägermaterial gefüllt ist, auf welchem die methanogenen Bakterien fixiert sind. Diese Fixation auf festem Packungsmaterial kann in einem sogenannten Anaerob-Filter oder an frei suspendiertem inerten Trägermaterial in einem sogenannten Wirbelbett-Reaktor stattfinden.

In der Praxis können wegen der Eigenschaften des methanogenen Schlammes (er enthält lediglich Bakterien, keine höheren Mikroorganismen und besitzt geringes Flockulationsvermögen) bedeutende Schlammverluste durch Abfliessen mit der Flüssigkeit entstehen. Diese Verluste sind besonders gravierend, wenn Störungen bis zur zweiten Stufe durchgreifen. Die Schlammverluste können dabei gleich oder grösser als die Schlammerzeugung sein und letztlich die Wirksamkeit des Methan-Reaktors beeinträchtigen.

Nach der Erfindung kann dem Methan-Reaktor deshalb eine Schlammabscheidungs-Stufe nachgeordnet sein - diese kann eine Schwerkraftabscheidung mittels eines Parallelplatten-Abscheiders oder eine andere Technik enthalten -, aus der der abgetrennte methanogene Schlamm teilweise oder ganz in den Methan-Reaktor rezirkuliert wird. Dieses Vorgehen, welches praktisch eine Kombination eines "Upflow"-Reaktors und eines Kontakt-Reaktors ist, wird ein Hybrid-Reaktor genannt.

Nach der Erfindung kann die Schlammabscheidung in der Schlammabscheidungsstufe durch eine vorherige Entgasung der den Methan-Reaktor verlassenden Reinflüssigkeit gefördert werden. Diese Entgasung kann beispielsweise in einem Kaskadenturm durchgeführt werden, in dem die Reinflüssigkeit über eine Reihe von alternierend angeordneten horizontalen Platten abwärtsströmt. Die Schlammabscheidung kann weiterhin durch eine kurze Belüftung der Reinflüssigkeit aus dem Methan-Reaktor (wenige Minuten) verbessert werden, wobei die Aktivität der anaeroben Bakterien durch einen Sauerstoffschock gehemmt wird.

Weiterhin kann die Schlammabscheidung in der Schlammabscheidungsstufe nach der Erfindung weiterhin durch die Zugabe kleiner Mengen von Polyelektrolyten, insbesondere von stark kationischen organischen Polyelektrolyten, verbessert werden.

Im folgenden wird ein vereinfachtes Flussdiagramm der grundsätzlichen Wirkungsweise der Erfindung beschrieben, das in beiliegender Zeichnung dargestellt ist. Wie bereits erwähnt, können einzelne Schritte oder Komponenten in Uebereinstimmung mit den individuellen Erfordernissen weggelassen werden.

Die der Anlage zugeführte Rohflüssigkeit 1 gelangt zunächst zur Temperatur-Regelung in einen ersten Wärmeaustauscher 2 und anschliessend in ein Reaktionsgefäss, den sogenannten BCCV, 3. Die Rohflüssigkeit 1 ist im allgemeinen ein wässriges Substrat von abbaubaren organischen Verbindungen. Das neue Verfahren ist vor allem anwendbar bei folgenden Industrien: Zuckerfabriken, Melasseverarbeitung,Hefefabriken, Destillerien und Alkohol-Produktion, Milchprodukte-Industrien, Früchte- und Gemüseverarbeitung, Konservenfabriken, Kartoffelverarbeitung und Stärkeindustrien, Flachsindustrien, Brauereien, Papierfabriken, Sojamilchproduktion, Schlachthäuser und Kadaververwertung, sowie einige petrochemische und pharmazeutische Industrien.

In das Reaktionsgefäss oder BCCV 3 werden unter kontinuierlichem oder intermittierendem Rühren, wenn notwendig, Biokatalysatoren 4, Nährstoffe 5 und Chemikalien 6 für die pH-Wert-Einstellung zugegeben. In ihm wird weiterhin Gas erzeugt, das im wesentlichen Kohlendioxid, Wasserstoff, Schwefelwasserstoff, Spuren von organischen Säuren enthält. Um Geruchsbelästigungen zu eliminieren, kann dieses Gas in einer Anlage 7 einer Geruchselimination unterzogen werden. Die den BCCV 3 verlassende Flüssigkeit gelangt in eine Schlammabscheidung 8. Der abgeschiedene Schlamm wird mindestens teilweise in das Gefäss 3 rezirkuliert; der Rest wird über eine Leitung 10 weggeführt. Das aus dem Schlammabscheider 8 austretende Gas kann ebenfalls der Geruchseliminationsanlage 7 zugeführt werden.

Die hydraulische Verweilzeit in dem Gefäss 3 beträgt ungefähr eine Stunde bis zwei Tage und die Belastung, ausgedrückt als kg CSB pro $m^3$ Tankvolumen und pro Tag, ist

ungefähr 5 - 150 kg CSB/($m^3$.d). In den meisten Fällen arbeitet der BCCV 3 in einem Bereich von drei Stunden bis zu einem Tag und bei 10 - 60 kg CSB/($m^3$.d). Die Temperatur liegt zwischen 10 - 65$^o$ C, vorzugsweise im Bereich von 25 - 55$^o$ C.

Die den Schlammabscheider 8 verlassende Flüssigkeit fliesst über einen zweiten Wärmeaustauscher 11 für eine nochmalige Temperatur-Regelung, nach der Zugabe von erforderlichen Nährstoffen 5 und/oder Chemikalien 6 für die pH-Wert-Einstellung, als Speiseflüssigkeit dem Methan-Reaktor 12 zu. Das methanreiche Biogas, das in diesem Reaktor erzeugt wird, kann einer Gasreinigungsanlage 13 zugeleitet werden, um Verunreinigungen zu entfernen und seinen kalorischen Wert zu erhöhen (Elimination von Kohlendioxid, Schwefelwasserstoff, Wasser usw.), bevor es an einen Verbraucher 14 weitergegeben wird.

Die Reinflüssigkeit aus dem Methan-Reaktor wird zunächst - unter Umständen nach einer kurzen Belüftung - in 15 entgast und gelangt in einen weiteren Schlammabscheider 16. Der abgeschiedene Schlamm wird teilweise oder vollständig in den Methan-Reaktor 12 zurückgeführt, der Rest aus der Anlage über die Leitung 18 ausgeschieden.

Die so behandelte Reinflüssigkeit verlässt den Schlammabscheider 16 und gelangt nach 19, um für die weitere Verwendung abgezogen oder je nach den lokalen Erfordernissen einer weiteren Behandlung unterworfen zu werden.

Die Verweilzeit in dem Methan-Reaktor beträgt ungefähr 3 Stunden bis 4 Tage. Die Belastung, ausgedrückt als kg CSB pro $m^3$ Tankvolumen und pro Tag, ist ungefähr 1 - 30 kg CSB/($m^3$.d). In den meisten Fällen arbeitet der Reaktor in einem Bereich von 6 Stunden bis zu

2 Tagen und von 8 - 25 kg CSB/($m^3$.d). Die Temperatur kann zwischen 28 und 60° C liegen und beträgt im allgemeinen jedoch 30 - 40° C.

Die spezifische Biogasproduktion ausgedrückt als $Nm^3$ Biogas pro $m^3$ Reaktorvolumen und pro Tag beträgt ungefähr 3 - 10 $Nm^3$/($m^3$.d) und liegt gewöhnlich zwischen 4 und 7 $Nm^3$/($m^3$.d).

Abhängig von dem Wert der pH-Wert-Aenderung im BCCV 3 oder im Methan-Reaktor 12 kann die Rohflüssigkeit 1 zu einem Notbassin 20 abgeleitet werden, um die Anlage zu schützen. Eine solche Ableitung kann auch durch eine Messung der pH-Wert-Aenderung über einen kleinen parallelgeschalteten - im Flussdiagramm nicht gezeigten - Monitor-BCCV ausgelöst werden, in welchem eine leicht abbaubare Substanz, z.B. Glukose, tropfenweise eingespeist wird. Solch ein Monitor-BCCV wird im Fall einer vollständig versäuerten Rohflüssigkeit angewendet. Das Flussdiagramm zeigt weiterhin weder eine Ammoniak-Elimination vor dem BCCV 3 oder vor dem Methan-Reaktor 12 für den Fall von toxisch wirkenden Ammoniak-Konzentrationen, noch die Elimination von toxischen Konzentrationen von Sulfat-, Schwefel-, Nitrat- und Nitrit-Ionen in der ersten Stufe.

Tabelle 1 zeigt die Ergebnisse von zwei typischen praktischen Anwendungen des Verfahrens nach der Erfindung; diese Ergebnisse sind mit halbindustriellen Pilotanlagen erreicht worden.

Tabelle 1

| Parameter | Einheit | Abwasser Zuckerfabrik | Abwasser Hefe- und Alkohol-fabrik |
|---|---|---|---|
| CSB Rohwasser | mg/l | 6000 | 32000 |
| BSB Rohwasser | mg/l | 4500 | 25600 |
| CSB Reinwasser | mg/l | 600 | 9000 |
| BSB Reinwasser | mg/l | 315 | 3000 |
| CSB-Elimination | % | 90 | 72 |
| BSB-Elimination | % | 93 | 88 |
| Verweilzeit BCCV 3 | Std. | 4,8 | 36 |
| Belastung BCCV 3 | kg CSB/ $(m^3.d)$ | 30 | 21,5 |
| Verweilzeit Methanreaktor 12 | Std. | 8,5 | 30 |
| Belastung Methanreaktor 12 | kg CSB/ $(m^3.d)$ | 15 | 22,6 |
| Biogas Erzeugung Methanreaktor 12 | $Nm^3/(m^3.d)$ | 6,8 | 8 |

Patentansprüche

1. Verfahren zur Erzeugung von Methan aus und zur Behandlung von organische Stoffe enthaltenden, wässrigen Flüssigkeiten mit Hilfe einer zweistufigen, anaeroben Fermentation, dadurch gekennzeichnet, dass in der ersten, der Ueberwachungs- und Konditionierungsstufe (3), die einfliessende Rohflüssigkeit durch Beeinflussung mindestens einer ihrer wesentlichen Kenngrössen, wie pH-Wert, Temperatur, Gehalt an festen Schwebstoffen, Durchsatzmenge sowie Konzentration und/oder chemische Zusammensetzung, zu einer Speiseflüssigkeit für die nachfolgende zweite, methanerzeugende Stufe (12) derart aufbereitet wird, dass in der ersten Stufe (3) aus den organischen Inhaltsstoffen der Rohflüssigkeit definierte, als Elektronenakzeptoren wirkende Zwischenverbindungen (electronic acceptor compounds) erzeugt werden, die weitgehend konstante und optimale Voraussetzungen für die methanerzeugenden Organismen der zweiten Stufe (12) bieten.

2. Verfahren nach Anspruch 1, dadurch gekennzeichnet, dass die erste Stufe (3) Solubilisations- und Hydrolyse-, sowie säurebildende Reaktionen umfasst.

3. Verfahren nach Anspruch 2, dadurch gekennzeichnet, dass die Solubilisations- und Hydrolyse-Reaktionen mit Hilfe einer Abscheidung und mindestens teilweisen Rückführung von Schlamm nach der ersten Stufe (3) durchgeführt werden.

4. Verfahren nach Anspruch 2, dadurch gekennzeichnet, dass die Solubilisations- und Hydrolyse-Reaktionen durch die Zugabe von Enzymen verbessert werden.

5. Verfahren nach einem der vorhergehenden Ansprüche, dadurch gekennzeichnet, dass zur Maximierung der geeigneten

Zwischenverbindungen für die Methanproduktion durch säurebildende, fermentative Bakterien die Bildung von Proprion-Säure gehemmt wird, indem man in der ersten Stufe (3) pH-Werte $< 6$, Zell-Aufenthaltszeiten $< 10$ Tage und/oder Raumbelastungen grösser 15 - 25 kg CSB/($m^3$.d) gewährleistet.

6. Verfahren nach einem der vorhergehenden Ansprüche, dadurch gekennzeichnet, dass zur Maximierung der geeigneten Zwischenverbindungen für die Methanproduktion durch säurebildende, fermentative Bakterien die Bildung von Buttersäure gefördert wird, indem man in der ersten Stufe (3) pH-Werte im Bereich von 5 - 6,5 und Zell-Aufenthaltszeiten im Bereich von 2 - 10 Tagen gewährleistet.

7. Verfahren nach einem der vorhergehenden Ansprüche, dadurch gekennzeichnet, dass zur Maximierung der geeigneten Zwischenverbindungen für die Methanproduktion durch säurebildende, fermentative Bakterien die Bildung von Essigsäure gefördert wird, indem man in der ersten Stufe (3) pH-Werte zwischen 5,2 und 5,5 und eine Raumbelastung von ungefähr 15 kg CSB/($m^3$.d) gewährleistet.

8. Verfahren nach einem der vorhergehenden Ansprüche, dadurch gekennzeichnet, dass zur Maximierung der geeigneten Zwischenverbindungen für die Methanproduktion durch säurebildende, fermentative Bakterien die Bildung von Milchsäure und Aethanol gefördert wird, indem man die erste Stufe (3) diskontinuierlich mit Rohflüssigkeit beschickt, wobei die hydraulische Verweilzeit einer Charge zwischen 3 Stunden und 2 Tagen beträgt.

9. Verfahren nach einem der vorhergehenden Ansprüche, dadurch gekennzeichnet, dass zur Maximierung der geeigneten Zwischenverbindungen für die Methanproduktion durch säurebildende,

fermentative Bakterien die Bildung von Aethanol gefördert wird, indem in der ersten Stufe (3) ein pH-Wert von etwa 4 und eine, ein Mehrfaches der hydraulischen Verweilzeit betragende, Zell-Aufenthaltszeit mit Hilfe einer möglichst vollständigen Schlammabtrennung und -rückführung gewährleistet werden.

10. Verfahren nach einem der vorhergehenden Ansprüche, dadurch gekennzeichnet, dass Qualität und Menge der aufbereiteten Speiseflüssigkeit für die zweite Stufe (12) durch mechanisches Rühren und/oder Aenderungen des Flüssigkeitsniveaus in der ersten Stufe (3) auf möglichst konstante Werte ausgeglichen werden.

11. Verfahren nach einem der vorhergehenden Ansprüche, dadurch gekennzeichnet, dass toxisch wirkende Anteile an Sulfaten und/oder Sulfiden durch bakterielle Reduktion des Sulfats der ersten Stufe (3) zu Sulfid ($H_2S$) und anschliessendes Ausblasen (Strippen) der Sulfide in saurer Lösung entfernt werden.

12. Verfahren nach einem der vorhergehenden Ansprüche, dadurch gekennzeichnet, dass toxisch wirkende Anteile an Nitrat und Nitrit durch bakterielle Reduktion zu Stickstoff in der ersten Stufe (3) entfernt werden.

13. Verfahren nach einem der vorhergehenden Ansprüche, dadurch gekennzeichnet, dass toxisch wirkende Anteile an Ammoniak vor oder nach der ersten Stufe (3) durch Erhöhung des pH-Wertes und Ausblasen (Strippen) des Ammoniaks oder durch andere Methoden - beispielsweise Ionenaustauschentfernt werden.

14. Verfahren nach einem der vorhergehenden Ansprüche, dadurch gekennzeichnet, dass die Zuverlässigkeit der Wirkung der zweiten Stufe (12) durch mindestens eine der nachfolgenden Regelungen verbessert wird:

- pH-Wert-Regelung in der ersten Stufe (3);
- pH-Wert-Regelung in der Speiseflüssigkeit für die zweite Stufe (12);
- Temperatur-Regelung der Rohflüssigkeit für die erste Stufe (3);
- Temperatur-Regelung der Speiseflüssigkeit für die zweite Stufe (12).

15. Verfahren nach einem der vorhergehenden Ansprüche, dadurch gekennzeichnet, dass die biologische Qualität der Rohflüssigkeit bzw. der Speiseflüssigkeit durch Messung der pH-Wert-Differenz zwischen der Roh- und der Austrittsflüssigkeit der ersten Stufe (3) und/oder zwischen der Speiseflüssigkeit und der die zweite Stufe (12) verlassenden Reinflüssigkeit gemessen wird, und dass ferner die Zufuhr der Rohflüssigkeit zu der ersten Stufe (3) bzw. diejenige der Speiseflüssigkeit zu der zweiten Stufe (12) bei nicht annehmbarer Qualität unterbrochen und einem Auffang- oder Notbecken (20) zugeleitet werden.

16. Verfahren nach einem der vorhergehenden Ansprüche, dadurch gekennzeichnet, dass bei einer bereits sauren Rohflüssigkeit parallel zum Strom der Speiseflüssigkeit zur zweiten Stufe (12) eine überwachende Nachbildung der ersten Stufe (Monitor-BCCV) angeordnet wird, dass in diese Nachbildung ein leicht abbaubares Substrat eingespeist und die pH-Wert-Aenderung in dieser Nachbildung zur Ueberwachung der Qualität der Speiseflüssigkeit gemessen wird, und dass bei ungenügender Qualität der Strom der Speiseflüssigkeit unterbrochen und einem Auffangbecken (20) zugeleitet wird.

17. Verfahren nach einem der vorhergehenden Ansprüche, dadurch gekennzeichnet, dass die Speiseflüssigkeit zur zweiten Stufe (12) in Funktion der pH-Wert-Differenz vor und nach dieser Stufe (12) in ihrer Menge so geregelt wird, dass eine bestimmte Ausbeute für die Methan-Fermentation erreicht und eingehalten wird.

18. Verfahren nach einem der vorhergehenden Ansprüche, dadurch gekennzeichnet, dass der Feststoffgehalt der Speiseflüssigkeit zur zweiten Stufe (12) auf einen Wert zwischen 0,2 und 0,25 des CSB-Gehaltes der gelösten Stoffe durch Abscheiden und teilweises Abziehen des Schlammes nach der ersten Stufe (3) eingestellt wird.

19. Verfahren nach einem der vorhergehenden Ansprüche, dadurch gekennzeichnet, dass Schlamm nach der zweiten Stufe (12) aus der Reinflüssigkeit abgeschieden und mindestens teilweise rezirkuliert wird, um Schlammverluste in der zweiten Stufe (12) auszugleichen.

20. Verfahren nach Anspruch 19, dadurch gekennzeichnet, dass die Schlammabscheidung durch eine vorhergehende Entgasung verbessert wird.

21. Verfahren nach Anspruch 19, dadurch gekennzeichnet, dass die Schlammabscheidung durch eine kurze vorherige Belüftung von einigen Minuten verbessert wird.

22. Verfahren nach Anspruch 19, dadurch gekennzeichnet, dass die Schlammabscheidung durch Zugabe von Polyelektrolyten verbessert wird.

23. Verfahren nach einem der vorhergehenden Ansprüche, dadurch gekennzeichnet, dass die erste Stufe (3) darin besteht, dass die Rohflüssigkeit zunächst zur Regelung

der Temperatur einem Wärmeaustauscher (2) und anschliessend einem Reaktionsgefäss (3) (BCCV) zugeführt wird, dass die aus der ersten Stufe (3) austretende Flüssigkeit einer Schlammabscheidung zugeleitet wird, und dass der abgeschiedene Schlamm ganz oder teilweise in das Reaktionsgefäss (3) rezirkuliert wird.

24. Verfahren nach Anspruch 23, dadurch gekennzeichnet, dass in der ersten Stufe gerührt wird und, falls erforderlich, Biokatalysatoren, Nährstoffe und/oder pH-Wertregelnde Chemikalien zugegeben werden.

25. Verfahren nach einem der vorhergehenden Ansprüche, dadurch gekennzeichnet, dass die in der ersten Stufe erzeugten Biogase desodoriert werden.

26. Verfahren nach einem der Ansprüche 1 - 22, dadurch gekennzeichnet, dass die zweite Stufe darin besteht, dass die Speiseflüssigkeit einem Methanreaktor (12) zugeführt und die ihn verlassende Reinflüssigkeit einer Entgasung und einer Schlammabscheidung zugeleitet wird, wobei der abgeschiedene Schlamm mindestens teilweise in den Methanreaktor (12) zurückgeführt wird.

27. Verfahren nach Anspruch 26, dadurch gekennzeichnet, dass die Temperatur vor dem Eintritt der Speiseflüssigkeit in den Methanreaktor (12) geregelt wird.

28. Verfahren nach einem der beiden vorhergehenden Ansprüche, dadurch gekennzeichnet, dass vor dem Eintritt der Speiseflüssigkeit in den Methanreaktor (12) Nährstoffe und/oder Chemikalien für die pH-Wert-Einstellung zugegeben werden.

29. Verfahren nach einem der Ansprüche 27 - 29, dadurch

gekennzeichnet, dass das in dem Methanreaktor (12) erzeugte Biogas einer Reinigung unterzogen wird.

30. Anlage zur Durchführung des Verfahrens nach einem der vorhergehenden Ansprüche, gekennzeichnet durch ein Reaktionsgefäss (3) für die Ueberwachung des biologischen Zustandes der Rohflüssigkeit und ihre Aufbereitung zu der Speiseflüssigkeit für die nachfolgende zweite Stufe (12) und ferner gekennzeichnet durch einen, dem Reaktionsgefäss (3) nachfolgenden Methanreaktor (12).

31. Anlage nach Anspruch 30, dadurch gekennzeichnet, dass der Methanerzeuger (12) als Aufwärtsstrom-Reaktor (UASB) ausgebildet ist, der ein expandiertes Schlammbett mit methanogenen Organismen enthält.

32. Anlage nach Anspruch 31, dadurch gekennzeichnet, dass in dem Aufwärtsstrom-Reaktor am Ende eine Einrichtung zur Trennung von Gasen, Flüssigkeiten und Feststoffen mit interner Schlammrückführung integriert ist.

33. Anlage nach Anspruch 30, dadurch gekennzeichnet, dass der Methanreaktor (12) ein inertes Trägermaterial für methanogene Organismen enthält.

34. Anlage nach Anspruch 33, dadurch gekennzeichnet, dass der Methanreaktor (12) ein anaerobes Filter ist.

35. Anlage nach Anspruch 33, dadurch gekennzeichnet, dass der Methanreaktor (12) ein Wirbelbett-Reaktor ist.

36. Anlage nach Anspruch 30, dadurch gekennzeichnet, dass zwei parallel zueinander liegende Reaktorgefässe (3) vorgesehen sind, die alternierend mit Rohflüssigkeit beaufschlagbar sind.

37. Anlage nach Anspruch 30, dadurch gekennzeichnet, dass das Reaktionsgefäss (3) ein Puffervolumen aufweist.

38. Anlage nach Anspruch 30, dadurch gekennzeichnet, dass das Reaktionsgefäss (3) mit einem Rührer ausgerüstet ist.

39. Anlage nach Anspruch 30, dadurch gekennzeichnet, dass zusätzlich ein Desodorator (7) vorhanden ist.

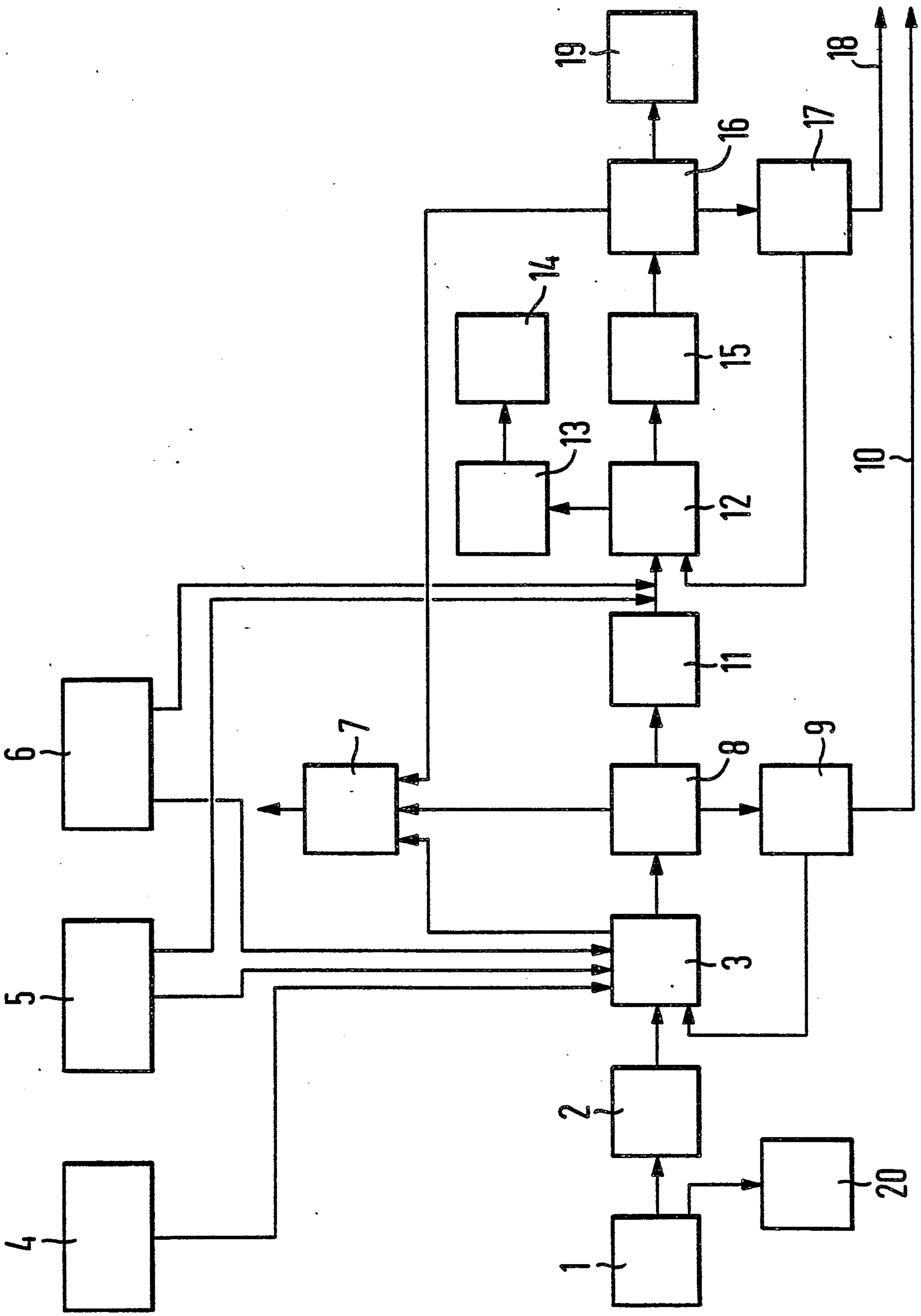

1
2
3
4
5
6
7
8
9
10
11
12
13
14
15
16
17
18
19
20

Europäisches Patentamt

# EUROPÄISCHER RECHERCHENBERICHT

0077002

Nummer der Anmeldung

EP 82 10 9180

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | DE-A-2 621 524 (HITACHI)<br>* Seite 4, Absatz 3 - Seite 6, Absatz 6; Seite 7, Zeile 6 - Seite 12; Seite 25, Ansprüche 8-11 * | 1-3,5, 9,10, 14,17, 19,21, 23-30, 38,39 | C 02 F 3/28 |
| X | US-A-4 022 665 (S.GHOSH)<br>* Spalte 2 - Spalte 3, Zeile 4; Spalte 3, Zeilen 59-66; Spalte 4, Zeile 51 - Spalte 6, Table II * | 1,2,5, 10,12, 14,19, 24-30, 38 | |
| | | | **RECHERCHIERTE SACHGEBIETE (Int. Cl. 3)** |
| X | CHEMICAL ABSTRACTS, Band 90, Nr. 15, 9. April 1979, Zusammenfassung Nr. 119740q, Seite 495, Columbus Ohio (US) M.H. JOERGENSEN: "Anaerobic formation of volatile acids in a chemostat". & Eur. J. Appl. Microbiol. Biotechnol. 1978, 6(2), 181-7 * Zusammenfassung * | 1 | C 02 F<br>C 12 M |

--- -/-

Der vorliegende Recherchenbericht wurde für alle Patentansprüche erstellt.

| Recherchenort | Abschlußdatum der Recherche | Prüfer |
|---|---|---|
| DEN HAAG | 18-01-1983 | TEPLY J. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

0077002 Nummer der Anmeldung

Europäisches Patentamt

# EUROPÄISCHER RECHERCHENBERICHT

EP 82 10 9180

Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | BIOTECHNOLOGY AND BIOENGINEERING, Band XXIII, Mai 1981, John Wiley & Sons, Inc., New York (US) P. PIPYN et al.: "Lactate and ethanol as intermediates in two-phase anaerobic digestion", Seiten 1145-1154. * Seite 1154, "Conclusion"; Seite 1148, "Experimental" - Seite 1149, Absatz 5; Seiten 1151-1154, "Discussion" * --- | 1,8,31 | |
| A | US-A-2 661 332 (E.N. MORTENSON) * Spalte 4, Zeile 49 - Spalte 5, Zeile 49 * --- | 20,22 | |
| A | DE-A-2 728 071 (BAYER) * Seite 6, Absätze 2 und 3; Seite 12, Absatz 2 - Seite 13, Absatz 1 * ----- | 15,16 | RECHERCHIERTE SACHGEBIETE (Int. Cl. 3) |

Der vorliegende Recherchenbericht wurde für alle Patentansprüche erstellt.

| Recherchenort | Abschlußdatum der Recherche | Prüfer |
|---|---|---|
| DEN HAAG | 18-01-1983 | TEPLY J. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument